# EUROPEAN PATENT APPLICATION

(11) **EP 0 824 967 A1**
(43) Date of publication of application: **25.02.1998**
(21) Application number: 95918161.1
(22) Date of filing: 10.05.1995
(51) Int. Cl.: B02C 23/04, C22B 1/00

(54) **REPROCESSING METHOD FOR SALVAGED METALLIC MATERIALS**

(71) Applicant: AIKOH CO. LTD., Taito-ku, Tokyo 110 (JP)
(72) Inventor: TAKASHIMA, Masaru, 1403, Sumitomo Shibaura Heights, Tokyo 108 (JP)
(74) Representative: Guerre, Dominique
(86) International application number: JP9500892
(87) International publication number: WO9635511

(57) **Abstract**

The present invention provides a reprocessing method for preventing ignition and explosion by dust generated during a reprocessing such as shearing and/or crushing of salvaged metallic materials comprising easily oxidative metals. The technical configuration of the present invention resides in a reprocessing method for salvaged metallic materials characterized in that a process for shearing and/or crushing salvaged metallic materials by a cutting machine and/or a crushing machine is carried out under either or both of the following conditions: (a) spraying by at least a two fluid type sprayer provided at a high position inside a room accommodating the cutting and grinding machines water mist of an average particle size of 10 µm or less in an amount of 4-10 cc/h/m³ relative to the volume of the room; and (b) providing a two fluid type sprayer on each of the cutting and grinding machines in such a manner as to be oriented to a dust generating portion and then spraying water mist of an average particle size ranging 10-200 µm in an amount of 1-100 wt.% of the generated dust volume.

## Description

### TECHNICAL FIELD OF THE INVENTION

This invention relates to a method for cyclically treating a metal material to be recovered, and more particularly to a treatment method for the purpose of preventing an ignition explosion accident which may be caused by dust generated in shearing and/or crushing procedures of the metal material.

### BACKGROUND OF THE INVENTION

It is well known that if an energy is given from an ignition source such as spark, flame or flash when floating solid fine particles in the range of about 1-100 µm, which are floating in air, reach a certain density, the burning often causes a vehement explosion i.e. so-called dust explosion.

Further, ignition sources include friction impact, static electricity and natural production of fire, and in such particular process of utilizing friction and impact as in shearing or crushing it is known that sparks are generated by the working material or other foreign substances.

The floating solid fine particles referred to in this invention are generally called dust, and the subject of dust explosion is directed to a variety of materials including inorganic materials not limited to metals and non-metals, and organic materials ranging from beans and other cereals to plastics.

The measures for preventing such explosion caused by dust are taken in a very wide range including control of dust generation, prevention of dust from flying and scattering, and measure against ignition source. However, a direct method for avoiding explosions to be mentioned is to pour water, sprinkle water or use fire extinguishers. Refer, as an example, to Japanese Patent Publication No. 45320/91.

These days, cyclic use of waste materials as resources is promoted from the viewpoint of limited resources. The treatment of metal materials to be recovered, which is pertained to the present invention, is a part of that promotion.

Incidentally, when a metal material to be recovered is recyclically treated it becomes unavoidable to pass respectively through a shearing step and a crushing step according to the type of the metals.

As described above, these shearing and crushing steps are accompanied by friction and impact, so that they have elements for ignition sources in addition to their primary dust generating sources. Thus, when metal materials to be recovered are recyclically treated the prevention measure against dust explosion becomes the most important subject a a policy for safety.

Particularly, when a metal material to be recovered is an easily oxidizable metal such as aluminium material a sufficient preventive measure against explosion is required since such material quickly proceeds with oxidation so as to cause an explosion easily.

However, in the mechanism accompanying fiction and imapct such as in shering and crushing of a metal material to be recovered there is not currently found a method for the recyclic treatment as an explosion prevention measure, which relies on an atomist spray of very fine water particles. By the "atomist spray" referred in the present invention is meant a spray of a mix fluid including mist of fine water particles of not greater than 200 µm.

According to the invention, as a prevention measure against explosion, a new setting is given to the spraying conditions of the atomist spary.

### DISCLOSURE OF THE INVENTION

The present invention was made to cope with the present situation explained above.

A first invention of this application relates to a method for the recyclic treatment of a metal material to be recovered, characterized in that in the shearing and/or crushing steps for recyclic treatment of the material at least by any of a shearing machine and a crushing machine, the treatment is carried out under one or both of the conditions in which
A) by means of at least one two-fluid type sprayer provided at a high place in the house of accommodating said machines, the atomist spray of not greater than 10 µm of mean particle size is sprayed by 4-10 cc/h/m³ for the indoor space volume, and
B) said machines are respectively installed with the two-fluid type sprayers directed to the dust generating place whereby atomist spray of mean particle size 10-200 µm is sprayed by 1-100% by weight for the dust generation amount.

A second invention of this application relates to the same method described in Claim 1 wherein the metal material to be recovered is an easily oxidizable metal.

### THE BEST MODE FOR CARRYING OUT THE INVENTION

The metal materials to be recovered in the invention cover all the metal materials which are recovered for cyclic use of resources. They are metal waste and refuse, processed produsts used, semi-products and the like, not limited in types of materials, ranging from place-like cans to laminated foils.

In the invention, the two-fluid type sprayer means a sprayer for spraying water and compressed air as two fluids, and the sprayers of the mode where atomist spray of not greater than 10 µm mean particle size can be obtained, are commercially available. It bases on such knowledge that it is suitable to collect and sediment dust of 1-100 µm particle size that the mean particle size of the mist is made not greater than 10 µm.

Referring to the spraying amount, not more than 4 cc/h/m³ of the amount is not sufficient to sediment the floating dust, and if the amount exceeds 10 cc/h/m³ it is excessive thereby inconveniently followed by excessive humidity and oxidation promotion.

In the above step (condition B), in order to sediment the dust in the dust generating places of the shearing and crushing machines, atomist spray of not greater than 10 µm mean particle size is insufficient while if exceeded 200 µm the particle size is too great so as not to be preferable. It is for the same reasoning that the spraying amount is set to 1-100% by weight of the dust generation amount.

On the other hand, the mean particle size and spraying amount of the atomist spray may be adjusted based, as option, on the using manner of the two-fluid type sprayer, the water quantity and the air pressure.

Easily oxidizable metals are a general appellation of metals having a strong affinity, and Aℓ, Mg, Ti and the like are mentioned as representatives thereof.

### FUNCTION

As described above, in the constitution of the present invention, the atomist spray having not greater than 10 µm mean particle size, which is sprayed in the indoor space at the rate of 4-10 cc/h/m³, catches and sediments the floating dust, and therefore it reduces the dust density and prevents generation of static electricity and natural production of fire because of suitable humidity whereby prevention measure against dust explosion can be taken even relied upon said atomist spray alone.

On the other hand, atomist spray having mean particle size of not greater than 10 µm has a characteristic that it does not make the objects wet.

Then, the atomist spray having 10-200 µm mean particle size, which corresponds to 1-100% by weight of the dust generation amount, is sprayed toward the dust generating regions, so that not only dust is prevented from scattering but also ignition by friction or impact can be avoided.

In such case, though the atomist spray having 10-200 µm mean particle size results in moistening the article to be treated, organic materials and inflammable articles are immediately removed after shearing and crushing in the recyclic treating procedure of the metal material to be recovered. Therefore any trouble does not occur to pass through a burning procedure.

### EXAMPLE

In a recycling treatment plant of aluminium material, which is equipped with a shearing type cutter mill and a hammer crusher, two two-fluid type sprayers having 2 ℓ/h spray power were installed at a ceiling of the plant building of 10m x 5m (height) dimension, and a recylcling treatment was effected while spraying the atomist spray of 8 µm mean particle size by 4 ℓ/h in totality. At that time the total amount of spraying was equivalent to 8 cc/h/m³.

Further, the hopper portion of each of said cutter mill and hammer crusher was installed with a two-flow type sprayer, and the recycling treatment was carried out while spraying 1,000 cc/h of the atomist spray of 100 µm means particle size into the interior of each of said cutter mill and hammer crusher. The spraying amount at that time was equivalents to about 25% by weight of the dust generation amount.

Then, the dust (90% by weight of Aℓ and 10% by weight of C) of the aluminium material to be recovered, which was collected and sedimented by the atomist spray, is re-used, after a suitable drying, as the material such as of heat generating agent, heat retention material for riser of steel melt, deoxidizing agent of steel, and modifier of steel slag.

As described above in detail, according to the recycling treatment method of metal materials to be recovered in the present invention, it is possible to recover the generated dust by immediately catching and sedimenting it by atomist spray in the metal dust generating source such as of the shearing machine and crushing machine in the treat, and it is capable of collecting and sedimenting even the dust floating within the building, by means of the atomist spray. Additionally, since it is possible to prevent ignition sources such as static electricity and natural production of fire by proper moistening whereby a recycling treatment can be carried out without causing a fear of dust explosion.

Furthermore, since other objects do not get wet in the atomist spray whose mean particle size is not greater than 10 µm it is possible to effectively apply the present invention even to the dust of easily oxidizable materials without causing a trouble by excessive moistening even to water-prohibiting metal powder.

Moreover, in case the metal material to be recovered is an aluminium material the recovering dust in the recycling treatment of the invention can be re-used being added to the material such as of heat generating agent, heat retention material of steel riser, deoxidizing agent of steel, and modifier of steel slag.

### POSSIBLE INDUSTRIAL UTILIZATION

The present invention is effective in particular as a recycling treatment method which previously prevents ignition and explosion caused by dust generated in the shearing and/or crushing steps of recycling treatment of metals to be recovered.

## Claims

1. A method for the recyclic treatment of a metal material to be recovered, characterized in that in the shearing and/or crushing steps for recyclic treatment of the material at least by any of a shearing machine and a crushing machine, the treatment is carried out under one or both of the conditions in which
A) by means of at least one two-fluid type sprayer provided at a high place in the house of accommodating said machines, the atomist spray of not greater than 10 µm of means particle size is sprayed by 4-10 cc/h/m³ for the indoor space volume, and
B) said machines are respectively installed with the two-fluid type sprayers directed to the dust generating place whereby atomist spray of mean particle size 10-200 µm is sprayed by 1-100% by weight for the dust generation amount.

2. A method for the recyclic treatment of a metal material according to Claim 1 wherein the metal material to be recovered is an easily oxidizable metal.
